# EUROPEAN PATENT SPECIFICATION

(11) **EP 0 928 265 B1**
(45) Date of publication and mention of the grant of the patent: **08.09.2004**
(21) Application number: 97918848.9
(22) Date of filing: 24.09.1997
(51) Int. Cl.: B60S 5/00, B60J 1/00

(54) **WINDSCREEN REPLACEMENT APPARATUS**
VORRICHTUNG ZUM VERFANGEN EINER WINDSCHUTZSCHEIBE
APPAREIL A REMPLACER LES PARE-BRISE

(30) Priority: 25.09.1996 AU 9602593; 24.03.1997 AU 9605833
(43) Date of publication of application: 14.07.1999
(73) Proprietor: BELRON INTERNATIONAL NV, Kralendijk Bonaire (AN)
(72) Inventor: GRECH, Stephen, Padstow, NSW 2211 (AU)
(74) Representative: Modiano, Guido, Dr.-Ing.
(86) International application number: PCT/AU1997/000644
(87) International publication number: WO 1998/013238

(56) References cited:
- FR-A- 2 225 964
- GB-A- 2 170 851
- GB-A- 2 273 517
- US-A- 3 620 524
- US-A- 5 429 253

## Description

### Technical Field

The present invention relates to the replacement of the windshield or windscreen of motor vehicles, and other large windows in vehicles such as rear windows.

### Background Art

Windscreens in motor vehicles continue to be vulnerable to accidental breakage, despite advances in glass and fitting technology. In particular, in many modern family cars the size of the front windscreen has increased significantly. Moreover, the glass is generally affixed by so-called direct glaze technology, in which the glass is directly adhered to the surround using urethane adhesive, rather than a sealing strip as in older vehicles. This creates dual problems. The weight of the windscreen has increased, so that weights of 14 kg or more are not uncommon. Simultaneously, the requirement for accurate placement of the windscreen has increased, as it must be placed in the correct position onto the adhesive with an accuracy of 1 or 2 mm to ensure accurate sealing. If the windscreen requires lateral movement to adjust its position after placement, this is likely to create deficiencies in the coverage of adhesive, and hence ultimately cause a leak. This is of course undesirable.

It is important to consider the context of modern windscreen replacement services. These are often provided on the road, as a mobile service. Ideally, this is a one man operation. However, consider the ergonomics of the situation described above. The installer has to hold the windscreen from one end, while leaning over the front of the vehicle, and accurately place the far end of the glass in position. Such an operation is very difficult, and also risks placing excessive strain on the lower back of the installer. As a result, for larger windscreens the practise of sending two installers has become common. This is not efficient as the second installer is only really required for the placement operation. In a workshop a gantry arrangement can be used - this is not available on the road.

Various attempts have been made to provide a suitable mechanism for mobile use. One device uses an arm mounted on the rear of the service vehicle, which attaches to the windscreen via the upper edge, and controls placement via a robotic arrangement. This is an expensive option. The arm is relatively complex and so requires considerable maintenance.

Another device, as described in GB 2 273 517, uses a track that is positioned above the top of the windscreen frame from which the windscreen hangs. The track is secured to the car windows by way of suction cups.

The main drawback with this system is that the installer must still carry an appreciable proportion of the weight of the windscreen, resulting in a higher risk of injury. The need to physically mount the rail on the windows of the car may result in damage of the windows, particularly with the added weight of the windscreen. Accurately positioning the windscreen into its frame from a suspended position is also relatively difficult.

It is an object of the present invention to provide a simple apparatus to assist with replacement of windscreens and facilitate safe one man operation.

### Summary of the Invention

According to one aspect the present invention provides apparatus for assisting in windscreen replacement, comprising a track member adapted to be located across a vehicle adjacent the base of the windscreen, and a support device adapted to releasably attach to a windscreen, said support device including means for engaging said track member and for travelling along said track member, the arrangement being such that the support device is operatively attached to a windscreen during a removal or insertion operation so that the windscreen is supported, and the windscreen can be moved along said track member.

Preferably, the support device is adapted to be attached via a suction cup, most preferably a pump operable suction cup. Preferably the support device travels via a concave faced wheel member, and the track member is tubular, so that the support device and hence windscreen when attached can be tilted away or towards the windscreen frame to facilitate removal or insertion of the windscreen. Preferably the support device includes an adjustable marking device, so that the marker can be set during removal of the windscreen, and used to correctly position the support device on the replacement windscreen for insertion.

According to a further aspect of the invention, there is provided a mounting assembly for supporting the track member in use across the vehicle. One embodiment of the mounting assembly comprises an upright post supporting the track member at its upper end, and terminating at its lower end in at least one stabilising assembly, which, in use, rests on the ground.

Preferably, the stabilising assembly comprises a first stabilising member extending substantially perpendicularly to said upright post, and further comprises a first anti-roll bar which extends together with the first stabilising member in a plane which is substantially perpendicular to the upright post, thereby providing a stable base for the mounting assembly. Preferably, the stabilising assembly further comprises a second stabilising member to which is attached a second anti-roll bar. This provides additional stability to the mounting assembly.

Preferably, the relative positions of the first and second anti-roll bars may be adjusted such that in use, they engage either side of a tyre of the vehicle, allowing the vehicle itself to provide even greater stability. Preferably, the upright post, the stabilising member, and the second stabilising member to which the second anti-roll bar is attached are all telescopically extendable and collapsible. This feature allows for the apparatus to be more compact in storage and transport.

In use, the apparatus could be supported by a mounting assembly placed at either side of the vehicle to support the track member at each end.

The present invention provides a simple, quickly mounted arrangement which accepts the load of the end of the windscreen remote from the installer. The track allows the windscreen to be correctly positioned, and then tilted into engagement. The components are simple, low maintenance and robust.

Preferred embodiments of the present invention will be described below with reference to the accompanying Figures.

### Brief Description of Drawings

Figure 1 illustrates in broken line the contours of a vehicle in front elevation and in full lines an apparatus for assisting in removing and mounting a windscreen on the vehicle in accordance with a first embodiment of the invention.
Figure 2 shows the apparatus of figure 1 in use during a tilting operation with the windscreen attached to a support device of the apparatus and illustrating a first mounting mechanism for the track member of the apparatus;
Figure 3 is a partial perspective front-side view of a vehicle showing an alternative mounting mechanism for the track member of the apparatus in accordance with the invention.
Figure 4 is a schematic illustration in section depicting one embodiment of means for adjusting the height of the track member and the spacing of the mounting means shown in Figure 3.

### Description of Preferred Embodiments

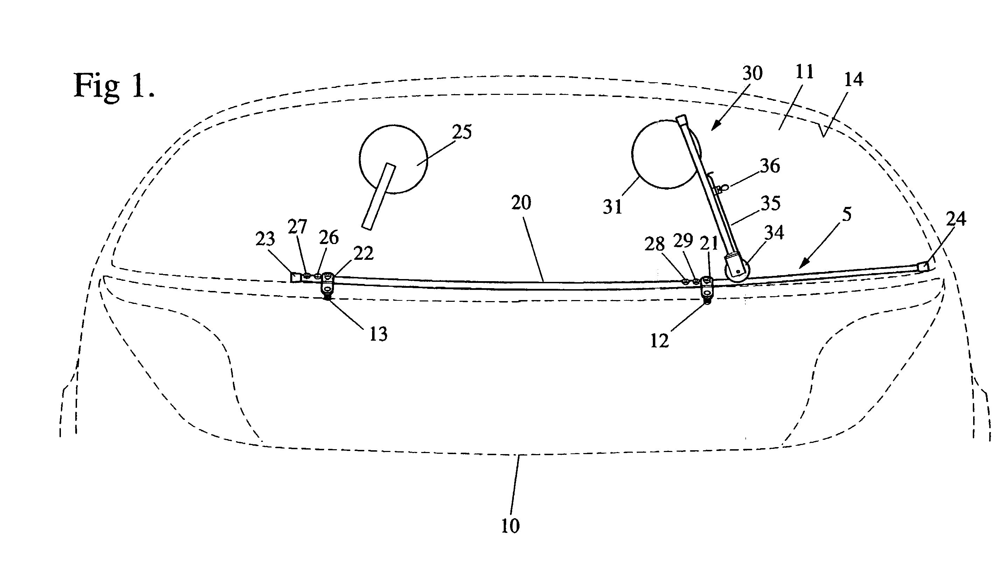

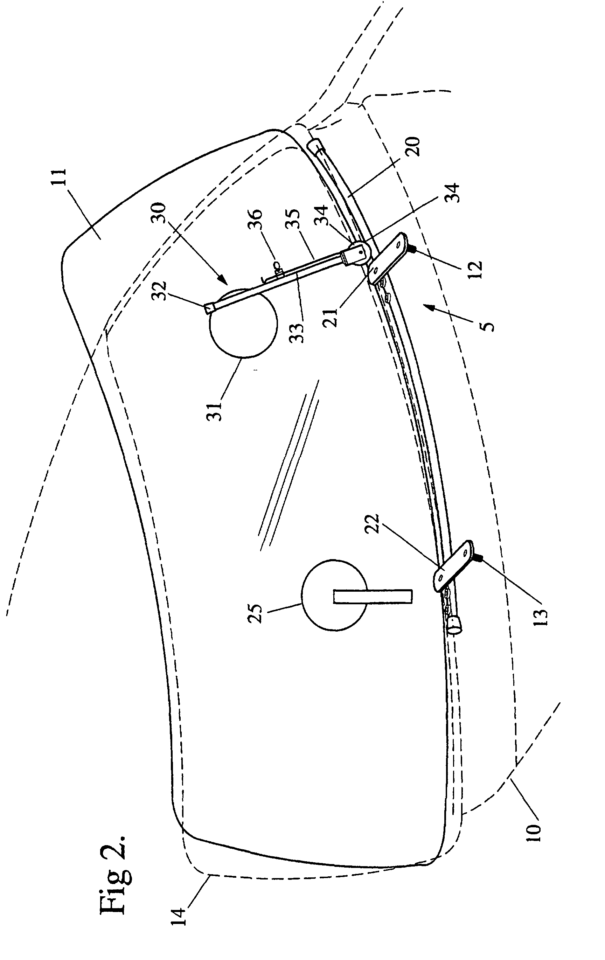

A first embodiment of the present invention will now be described with reference to figures 1 and 2.

Referring first to Figure 1, the inventive apparatus 5 for exchanging windscreens comprises a track member 20, a support device 30 for engaging windscreen 11 of the vehicle (shown in phantom lines at 10) and the track member 20, and mounting elements 21, 22 for securing the track member 20 to extend across the base of the windscreen frame 14 in width-wise direction of the vehicle 10. Since in most modern vehicles it is necessary to remove the windscreen wipers in order to replace the windscreen, track member 20 is secured in its position on the vehicle by mounting plates 21, 22 which engage the spindles of the wipers 12, 13. Mounting plates 21, 22 have bores so as to simply slide over the spindles. Mounting plates 21, 22 are attached to track member 20 via hand operated screws (not shown) which engage orifices in the track member. To accommodate different vehicles with different wiper spacings, track member 20 has a plurality of spaced apart orifices 26, 27, 28, 29 for securing mounting plates 21, 22 thereto. Mounting plates 21, 22 are secured to the track such as to allow rotation about the screws to accommodate minor variations in position. Track member 20 has rubber boots 23, 24 attached to both ends to minimise the risk of damage to the vehicle paintwork - if desired, the whole track could be coated in a resilient material.

Alternative ways to fasten mounting plates 21, 22 to the wiper spindles 12, 13 could be used, such as snap fittings (not illustrated).

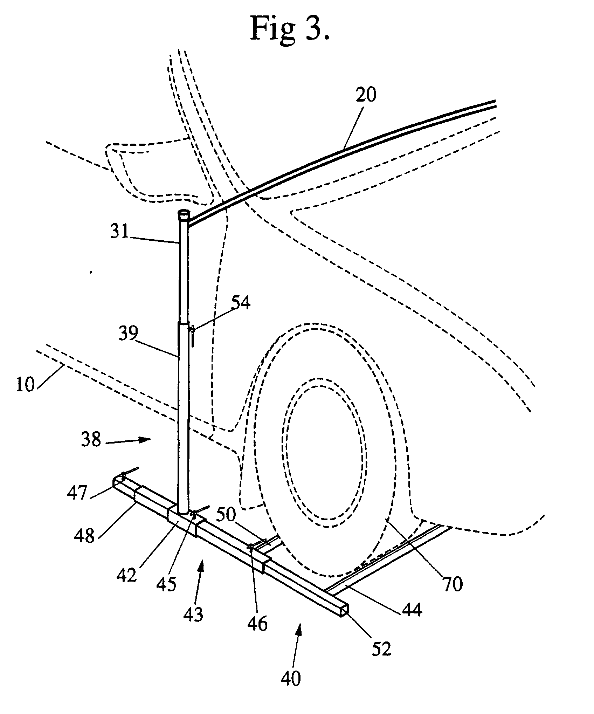

Figure 3 depicts an alternative mounting system by means of which track member 20 is supported by the ground adjacent the vehicle rather than the attachment mechanism (mounting plates) previously described. In this embodiment track member or rail 20 is supported by "A" frames or tripods 38 or other suitably shaped structures which are positioned on the ground on which the car rests. In the embodiment illustrated in Figure 3, the mounting assembly 38 includes an upright tube 39 ending at its lower end in a base provided by a length of rectangular section 42 which incorporates a locking spigot 45 and extends perpendicular to tube 39.

In an embodiment not illustrated, tube 39 is pivoted between parallel flanges welded on the upper side of rectangular section 42. This arrangement allows tube 39 to be pivoted to lie in contact with base section 42 and stabilising assembly 43 for storing and transport purposes. When in use, tube 39 is rotated into its erect position and locked into position for example by a screw having a knob which is received for frictional engagement in the flanges.

Base 42 is stabilised on the ground by means of at least one stabilising assembly, figure 3 showing two such stabilising assemblies 40, 43. The first stabilising assembly 43 comprises a length of rectangular section 48 whose outer cross section is similar in shape, and slightly smaller, than the inner cross-section of base 42. It further comprises a locking spigot 46 and an anti-roll mechanism, here bar 50 extending perpendicular to section 48 horizontally. The second stabilising assembly 40 is comprised of a rectangular section 52 whose outer cross section is similar in shape, and slightly smaller, that the inner cross section of section 48 of first stabilising assembly 43, and also an anti-roll member provided by a bar 44 which extends parallel with bar 50.

Section 48 of the first stabilising assembly 43 is received within base 42 so that the plane containing stabilising bar 50 and section 48 is at right angles with tube 39. Section 52 of the second stabilising assembly 40 is located within section 48 of the first stabilising assembling 43 so that the anti-roll bars 44 and 50 are in the same horizontal plane.

Upon unlocking spigot 45, which locks section 48 of the first stabilising assembly 43 to base 42, and spigot 46, which locks section 52 of the second stabilising assembly 40 to section 48 of the first stabilising assembly 43, the relative positions of the anti-roll bars 44, 50 can be adjusted. It is preferable that adjustment is made so that anti-roll bars 44, 50 are positioned to engage either side of the tyre 70 so as to additionally stabilise the entire mounting assembly 38. Such additional stabilising may be required in the event that the ground is uneven or steeply angled from the horizontal.

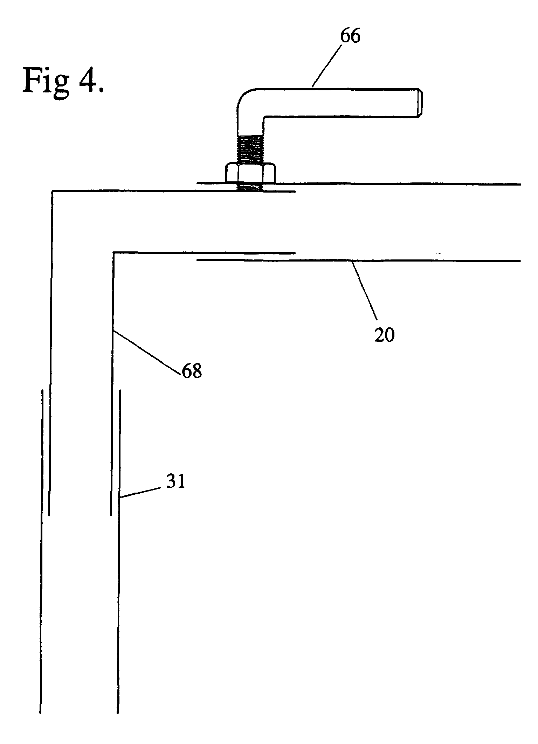

According to this embodiment of the invention one such mounting assembly 38 is installed on both lateral sides of the vehicle 10. Track member 20 ends at either end in a right angle by which it is inserted into an upper tube 31 telescopically received within part 39 of the mounting assemblies 38 at each side of the car, and locked into position by spigot 54. In order to provide for fine adjustment of the distance between mounting assemblies 38 and accommodate a range of cars of different width, it is also possible to incorporate a width adjustment mechanism to alter the length of track 20 as shown in Figure 4. Right angled rod 68 is inserted into tube 31 of the mounting assembly 38 and into the end of track member 20, which is hollow. If required, a spigot 66 may be included to lock track member 20 in place.

As can be seen, track member 20 is slightly curved to match generally the curvature of windscreen 11. Of course, the precise shape will depend on the vehicles for which track member 20 is intended to be used. It would be possible to provide specific, non-adjustable track members for the most popular vehicle models, and only use adjustable length tracks for other vehicles. A curvature intermediate the exact curvatures at the base of the windscreen frame 14 of most similarly sized vehicles will work satisfactorily, even if the curvature is not congruent.

Referring again to figures 1 and 2, support device 30 of the apparatus includes a suction cup 31 with associated pump device 32 mounted near or at the terminal end of rod member 33. Suction cups provide a very secure attachment mechanism, which is particularly important when the support device 30 is located at a point where it cannot be reached during use. Rod member 33 carries at its lower end a support device 30 for wheel 34 having a concave peripheral surface, which provides better contact with track member 20, which is preferably circular in cross-section. It will be understood that alternative arrangements, for example a non-grooved wheel disposed in a groove formed in the track member, could be substituted. However, grooved wheel 34 allows for the support device 30 as a whole to be easily tilted about track 30 without losing contact therewith.

A guide 35 formed from wire or the like, and secured by a thumb screw 36 is disposed on rod member 33. The guide can be set to a position indicative of the base of the windscreen 11 when the old windscreen is removed. This facilitates subsequent correct placement of the support device 30 on the new windscreen. If support device 30 is attached too high or too low, the windscreen 11 will not tilt into the correct position during installation. Alternative guide means can readily be provided, for example a resilient or ratchet mechanism.

Operation of the inventive apparatus in the context of a typical operation will now be described.

Referring to Figure 1, assume that initially the old windscreen is cracked, and requires removal and replacement. The wipers are removed, and the windscreen 11 is disengaged conventionally at the edge from the windscreen frame 14 of the vehicle 10. Track member 20 is then placed into position, with the mounting plates 21, 22 engaging over the wiper spindles 12, 13.

Alternatively, track member 20 may be ground mounted as discussed above with reference to and illustrated in figure 3. The support device 30 is then placed with wheel 34 engaging track member 20 and with the suction cup 31 towards the windscreen 11. Pump 32 is operated manually so that the suction cup 31 fixes to the windscreen 11. Guide means 35 is then set to the bottom of the windscreen 11, and fixed via thumb screw 36. A hand-held suction gripper 25 is attached towards the other end of windscreen 11, on the side where the operator intends to stand. Referring now to figure 2, windscreen 11 is tilted away from the frame 14 towards the front of the vehicle 10, engagement of wheel 34 on track 20 being secured due to the weight of the windscreen, by the operator using suction gripper 25 and subsequently slid along track 20 until the operator can comfortably lift the windscreen 11 (and attached support device 30) clear of the vehicle 10.

The hand-held gripper 25 is then attached to one end of a new windscreen, and support device 30 is positioned at the other end using guide 35 with cup 31 resting on the windscreen. Pump 32 is then operated until suction cup 31 is firmly attached to the windscreen screen. Appropriate adhesive material is applied to the mounting surface at the windscreen frame 14 of the vehicle prior to re-positioning the windscreen, as is conventional. The windscreen is then lifted into position so that wheel 34 engages track member 20 and the installer slides the windscreen until it is in the correct position. The windscreen is then simply tilted back into position and hand-held gripper 25 and support device 30 are removed.

Hand-held gripper 25 could quite conceivably be replaced by a second support device, thereby allowing the windscreen to be slid across the track member 20 and supported at each end by a separate support device.

It will be understood that variations of the above described apparatus are possible within the scope of the invention, one characterising feature of which is locating and securing of the track member at the base of the windscreen frame for ease of windscreen exchange handling.

For example, the mounting means may comprise an L-shape stand with the leg of the stand having anti-roll bars. The leg of the stand is slid underneath the car, and the track member attached to or near the top of the stand. Thus in use, the stand and the track member form a C-frame.

Alternatively, the mounting means may comprise a U-shape stand, with the base member of the 'U' having anti-roll bars. The track member may then be supported at each end by the upright members of the stand, thus forming a closed, rectangular frame supporting the support device and windscreen.

## Claims

1. An apparatus (5) for assisting in windscreen (11) replacement of a vehicle (10), including:
a track member (20),
a support device (30) adapted to releasably attach to a windscreen (11), said support device (30) including means (34) for engaging said track member (20) and travelling along said track member,
wherein the support device (30) is operatively attached to the windscreen (11) and the track member (20) during a removal or insertion operation whereby the windscreen (11) is at least partially supported by, and can be moved along said track member (20)
**characterized in that** the apparatus (5) also includes a mechanism (21, 22; 38) for positioning and temporarily fixing the track member (20) to extend across the width of the vehicle (10) adjacent the base of the windscreen (11).

2. An apparatus according to claim 1, wherein the support device (30) includes at least one suction cup (31) adapted to be attached to the windscreen (11).

3. An apparatus according to claim 2, wherein the support device (30) includes a pump (32) for evacuating and pressurising the suction cup (31).

4. An apparatus according to claim 1, wherein the means for engaging the track member includes a wheel member (34) adapted to engage the track member (20).

5. An apparatus according to claim 4 wherein the track members (20) is cross-sectionally tubular, and wherein the wheel member (34) has a concave peripheral face adapted to co-operate with the cross-sectionally tubular track member (20) such that the support device (30) and attached windscreen (11) are tiltable about the longitudinal axis of the cross- sectionally tubular track (20) to facilitate removal or insertion of the windscreen (11).

6. An apparatus according to claim 5, wherein the support device includes a rod (33) carrying the suction cup (31) at, or near an upper end thereof, and the wheel member (34) at a lower end thereof.

7. An apparatus according to claim 2, wherein the support device (30) includes an adjustable marking device which is settable to indicate positioning of the suction cup (31) on the windscreen (11) during removal of the windscreen so as to permit subsequent accurate positioning of the suction cup (31) on the replacement windscreen for insertion thereof.

8. An apparatus according to claim 1, wherein the mechanism for positioning and temporarily fixing the track member (20) includes means (21, 22) for mounting the track member to the wiper spindles (12, 13) of the vehicle (10)

9. An apparatus according to claim 1, wherein the mechanism for positioning and temporarily fixing the track member includes a mounting assembly (38) comprising an upright post (39) terminating at its lower end in at least one stabilising assembly (40, 43) which, in use, rests on the ground, and means (31, 60) for supporting the track member (20) at its upper end.

10. An apparatus according to claim 9, wherein the stabilising assembly includes a first stabilising member (43) which extends substantially perpendicularly to said upright post, and further comprise a first anti-roll bar (50) which extends together with said first stabilising member (43) in a plane which is substantially perpendicular to said upright post (39).

11. An apparatus according to claim 10, wherein said first stabilising member (43) is telescopically extendable and collapsible.

12. An apparatus according to claim 10, wherein said stabilising assembly also includes a second stabilising member (46) to which is attached a second anti-roll bar (44) providing additional stability to the mounting assembly.

13. An apparatus according to claim 12, wherein said second stabilising member (40) is telescopically extendable and collapsible from said first stabilising member (43).

14. An apparatus according to claim 13, wherein the stabilising assembly includes means (46, 47) for adjusting the relative positions of the first and second anti-roll bars (44, 50) such that these, in use, engage either side of a tyre (70) of the vehicle (10).

15. An apparatus according to claim 9, wherein said upright post (39) is telescopically extendable and collapsible.

16. An apparatus according to claim 1, including two mounting assemblies (38) in accordance with any one of claims 9 to 15 disposed to be installed at either side of the vehicle (10) each end of the track member (20) being supported by one mounting assembly.

## Patentansprüche

1. Ein Gerät (5) zum Unterstützen des Austauschs einer Windschutzscheibe (11) eines Fahrzeugs (10), das folgendes einschließt:
ein Schienenglied (20);
eine Stützvorrichtung (30), die ausgebildet ist, um abnehmbar an einer Windschutzscheibe (11) angebracht zu werden, wobei die Stützvorrichtung (30) ein Mittel (34) zum Eingreifen in das Schienenglied (20) einschließt und am Schienenglied entlang wandert, worin die Stützvorrichtung (30) operativ an der Windschutzscheibe (11) und am Schienenglied (20) während eines Entnahme- oder Einführungsbetriebs angebracht ist, wodurch die Windschutzscheibe (11) zumindest teilweise durch das Schienenglied (20) gestützt und daran entlang bewegt werden kann, **dadurch gekennzeichnet, dass**
das Gerät (5) auch einen Mechanismus (21, 22; 38) zum Positionieren und vorübergehenden Befestigen des Schienenglieds (20) einschließt, um sich über die Breite des Fahrzeugs (10) angrenzend an der Basis der Windschutzscheibe (11) zu erstrecken.

2. Ein Gerät nach Anspruch 1, worin die Stützvorrichtung (30) mindestens einen Saugnapf (31) einschließt, der ausgebildet ist, um an der Windschutzscheibe (11) angebracht zu werden.

3. Ein Gerät nach Anspruch 2, worin die Stützvorrichtung (30) eine Pumpe (32) zur Entleerung und Druckbeaufschlagung des Saugnapfs (31) einschließt.

4. Ein Gerät nach Anspruch 1, worin das Mittel zum Eingreifen in das Schienenglied ein Radglied (34) einschließt, das ausgebildet ist, um in das Schienenglied (20) einzugreifen.

5. Ein Gerät nach Anspruch 4, worin das Schienenglied (20) im Querschnitt röhrenförmig ist und worin das Radglied (34) eine konkave Randoberfläche hat, die ausgebildet ist, um so mit dem im Querschnitt röhrenförmigen Schienenglied (20) zusammenzuwirken, dass die Stützvorrichtung (30) und die angebrachte Windschutzscheibe (11) um die Längsachse der im Querschnitt röhrenförmigen Schiene (20) geneigt werden können, um die Entnahme oder Einführung der Windschutzscheibe (11) zu ermöglichen.

6. Ein Gerät nach Anspruch 5, worin die Stützvorrichtung eine Stange (33) einschließt, die am oberen Ende oder in der Nähe davon den Saugnapf (31) und an einem unteren Ende davon das Radglied (34) trägt.

7. Ein Gerät nach Anspruch 2, worin die Stützvorrichtung (30) eine einstellbare Markierungsvorrichtung einschließt, die einstellbar ist, um die Positionierung des Saugnapfs (31) auf der Windschutzscheibe (11) während der Entnahme der Windschutzscheibe anzuzeigen, damit die anschließende genaue Positionierung des Saugnapfs (31) auf der Ersatzwindschutzscheibe erlaubt wird, um sie einzusetzen.

8. Ein Gerät nach Anspruch 1, worin der Mechanismus zum Positionieren und vorübergehenden Befestigen des Schienenglieds (20) ein Mittel (21, 22) zum Anbringen des Schienenglieds an den Wischerspindeln (12, 13) des Fahrzeugs (10) einschließt.

9. Ein Gerät nach Anspruch 1, worin der Mechanismus zum Positionieren und vorübergehenden Befestigen des Schienenglieds einen Anbringungsaufbau (38) einschließt, der einen geraden Ständer (39) umfasst, der an seinem unteren Ende in zumindest einem stabilisierenden Aufbau (40, 43) endet, der, wenn in Gebrauch, auf dem Boden liegt, und ein Mittel (31, 60) zum Stützen des Schienenglieds (20) an seinem oberen Ende einschließt.

10. Ein Gerät nach Anspruch 9, worin der stabilisierende Aufbau ein erstes stabilisierendes Glied (43) einschließt, das sich im Wesentlichen senkrecht zum geraden Ständer erstreckt, und weiter einen ersten Querstabilisator (50) umfasst, der sich zusammen mit dem ersten stabilsierenden Glied (43) in einer Ebene erstreckt, die sich im Wesentlichen senkrecht zum geraden Ständer (39) befindet.

11. Ein Gerät nach Anspruch 10, worin das erste stabilisierende Glied (43) teleskopisch erweiterbar und faltbar ist.

12. Ein Gerät nach Anspruch 10, worin der stabilisierende Aufbau auch ein zweites stabilsierendes Glied (46) einschließt, das an einem zweiten Querstabilisator (44) angebracht ist, wobei für eine zusätzliche Stabilität des Anbringungsaufbaus gesorgt wird.

13. Ein Gerät nach Anspruch 12, worin das zweite stabilisierende Glied (40) teleskopisch aus dem ersten stabilisierenden Glied (43) erweiterbar und faltbar ist.

14. Ein Gerät nach Anspruch 13, worin der stabilisierende Aufbau ein Mittel (46, 47) zum Einstellen der relativen Stellungen des ersten und zweiten Querstabilisators (44, 50) einschließt, so dass diese im Gebrauch in jede Seite eines Radreifens (70) des Fahrzeugs (10) eingreifen.

15. Ein Gerät nach Anspruch 9, worin der gerade Ständer (39) teleskopisch erweiterbar und faltbar ist.

16. Ein Gerät nach Anspruch 1, das zwei Anbringungsaufbauten (38) in Übereinstimmung mit irgendeinem der Ansprüche 9 bis 15 einschließt, die angeordnet sind, um an jeder Seite des Fahrzeugs (10) installiert zu werden, wobei jedes Ende des Schienenglieds (20) durch einen Anbringungsaufbau gestützt wird.

## Revendications

1. Un dispositif (5) pour aider au remplacement d'un pare-brise (11) d'un véhicule (10) comprenant :
un organe formant piste (20),
un dispositif support (30) adapté pour s'attacher de façon désolidarisable à un pare-brise (11), ledit dispositif support (30) comprenant des moyens (34) pour mettre en prise ledit organe formant piste (20) et se déplaçant le long dudit organe formant piste, dans lequel le dispositif support (30) est attaché fonctionnellement au pare-brise (11) et à l'organe formant piste (20) durant une opération d'enlèvement ou d'insertion, de manière que le pare-brise (11) soit au moins partiellement supporté par, et puisse être déplacé le long dudit organe formant piste (20), **caractérisé en ce que** le dispositif (5) comprend également un mécanisme (21, 22; 38) pour positionner et fixer temporairement l'organe formant piste (20), afin de s'étendre dans la largeur du véhicule (10), de façon adjacente à la base du pare-brise (11).

2. Un dispositif selon la revendication 1, dans lequel le dispositif support (30) comprend au moins une ventouse (31), adaptée pour être fixée au pare-brise (11).

3. Un dispositif selon la revendication 2, dans lequel le dispositif de support (30) comprend une pompe (32) pour évacuer et pressuriser la ventouse (31).

4. Un dispositif selon la revendication 1, dans lequel des moyens pour mettre en prise l'organe formant piste comprennent un organe formant roue (34), adapté pour venir en prise avec l'organe formant piste (20).

5. Un dispositif selon la revendication 4, dans lequel l'organe ne formant piste (20) a une section transversale tubulaire et dans lequel l'organe formant roue (34) a une face périphérique concave, adaptée pour coopérer avec l'organe formant piste (20) à section transversale tubulaire, de manière que le dispositif support (30) et le pare-brise (11) attaché puissent être inclinés autour de l'axe longitudinale de la piste (20) à section transversale tubulaire, pour faciliter l'enlèvement ou l'insertion du pare-brise (11).

6. Un dispositif selon la revendication 5, dans lequel le dispositif support comprend une tige (33) portant la ventouse (31) à ou près d'une extrémité supérieure de celle-ci, et portant l'organe formant roue (34) à son extrémité inférieure.

7. Un dispositif selon la revendication 2, dans lequel le dispositif support (30) comprend un dispositif de marquage ajustable, réglable pour indiquer le positionnement de la ventouse (31) sur le pare-brise (11) durant l'enlèvement du pare-brise, pour permettre un positionnement précis subséquent de la ventouse (31) lors du remplacement du pare-brise, pour son insertion.

8. Un dispositif selon la revendication 1, dans lequel le mécanisme de positionnement et de fixation temporaire de l'organe formant piste (20) comprend des moyens (21, 22), pour monter l'organe formant piste sur les broches d'essuie-glace (12, 13) du véhicule (10).

9. Un dispositif selon la revendication 1, dans lequel le mécanisme de positionnement et de fixation temporaire de l'organe formant piste comprend un ensemble de montage (38), comprenant un pilier montant (39) s'achevant, à son extrémité inférieure, en au moins un ensemble de stabilisation (40, 43), qui en utilisation repose au sol, et des moyens (31, 68) pour supporter l'organe formant piste (20) à son extrémité supérieure.

10. Un dispositif selon la revendication 9, dans lequel l'ensemble de stabilisation comprend un organe de stabilisation (43), s'étendant sensiblement perpendiculairement audit pilier montant, et comprend en outre une première barre anti-roulis (50), s'étendant, conjointement avec ledit premier organe de stabilisation (43), dans un plan sensiblement perpendiculaire audit pilier montant (39).

11. Un dispositif selon la revendication 10, dans lequel ledit premier organe stabilisateur (43) est déployable et rétractable de façon télescopique.

12. Un dispositif selon la revendication 10, dans lequel ledit organe stabilisant comprend également un deuxième organe stabilisateur (46), auquel est fixée une deuxième barre anti-roulis (44), fournissant une stabilité additionnelle à l'ensemble de montage.

13. Un dispositif selon la revendication 12, dans lequel le deuxième organe stabilisateur (40) est déployable et rétractable de façon télescopique vis à vis dudit premier organe stabilisateur (43).

14. Un dispositif selon la revendication 13, dans lequel l'ensemble stabilisateur comprend des moyens (46, 47), pour ajuster les positions relatives des premières et deuxièmes barres anti-roulis (44, 50) de manière que celles-ci en utilisation viennent en contact avec chaque côté d'un pneumatique (70) du véhicule (10).

15. Un dispositif selon la revendication 9, dans lequel lesdits piliers montants (39) sont déployables et rétractables de façon télescopique.

16. Un dispositif selon la revendication 1, comprenant en outre deux ensembles de montage (38) selon l'une quelconque des revendications 9 à 15, disposés pour être installés de chaque côté du véhicule (10), chaque extrémité de l'organe formant piste (20) étant supportée par un ensemble de montage.
